# EUROPEAN PATENT SPECIFICATION

(11) **EP 1 127 032 B1**
(45) Date of publication and mention of the grant of the patent: **28.01.2004**
(21) Application number: 99947421.6
(22) Date of filing: 24.09.1999
(51) Int. Cl.: C03C 1/00

(54) **MAN-MADE VITREOUS FIBRE PRODUCTS FOR USE IN THERMAL INSULATION, AND THEIR PRODUCTION**
SYNTHETISCHE GLASFASERPRODUKTE FÜR WÄRMEISOLIERUNG UND DEREN HERSTELLUNG
PRODUCTION DE PRODUITS D'ISOLATION THERMIQUE EN MATIERE DE FIBRES VITREUSES

(30) Priority: 24.09.1998 EP 98307761; 09.07.1999 GB 9916174; 09.07.1999 GB 9916175; 09.07.1999 GB 9916176
(43) Date of publication of application: 29.08.2001
(73) Proprietor: Rockwool International A/S, 2640 Hedehusene (DK)
(72) Inventor: DYRBOEL, Susanne, DK-4690 Haslev (DK); HANSEN, Erling, Lennart, DK-2820 Gentoffe (DK); FRICKMANN, Trine, DK-3840 Fredensborg (DK); CRIDLAND, Ian, DK-2720 Vanl se (DK)
(74) Representative: Samuels, Lucy Alice
(86) International application number: PCT/EP1999/007120
(87) International publication number: WO 2000/017120

(56) References cited:
- WO-A-92/04301
- FR-A- 842 585
- US-A- 2 809 397
- US-A- 3 793 204
- US-A- 5 244 722
- DATABASE WPI Section Ch, Derwent Publications Ltd., London, GB; Class A87, AN 73-65033U XP002095150 & SU 367 062 A (ASHRATOVA SHK BELEBEZEVA)

## Description

This invention relates to thermal insulation products based on man-made vitreous fibres (MMVF) and which are modified in a simple manner so as to give improved thermal insulation as indicated by a reduced λ value.

It is known that MMVF products can, depending upon their intended use, be made generally either by wet laying or air laying.

Wet laying is used for products which are to have high structural strength and high density and involves forming a slurry in water of MMVF together with various additives and forming the slurry into the desired shape and removing the water, for instance by moulding or draining the slurry. A wide range of additives are included in such products with the MMVF in order to provide the desired combination of toughness, strength, crack resistance and other physical properties. Such products typically have a density of above 400 and often above 750 kg/m³.

One example of such products is in US 5,244,722 in which a moulded casting is made by draining an aqueous dispersion of mineral wool containing particulate additives which form incrustations in the resultant moulded product. Additives which are mentioned include clays, colourants, thermoplasts, duroplasts, acids, bases, metals, metallic oxides, silicones, materials containing crystalline water, and carbon. It is mentioned that the use of graphite to produce graphite incrustations is useful to increase slickness and to improve absorption of radiation. In particular, it is stated that the use of carbon black or graphite is useful for the absorption of microwaves or radar waves and that castings made from such materials are useful in areas close to airports to prevent radar interference.

Similarly, US 3,793,204 describes insulating material generally produced by mixing inorganic or carbonaceous fibres with water and binder such as starch, forming the resulting slurry into the desired shape and then heating to carbonise the binder and hold the fibres together. In this system graphite flakes are included in the shaped moulding. It is stated that the graphite flakes are oriented so that the maximum dimension of each flake is disposed essentially orthogonal to the expected direction of heat flow through the moulded composite. This is said to be essential in order to achieve effective reduction in thermal conductivity. It is also stated that the ratio of fibres to graphite should be in the range 1:0.5 to 1:2 (ie 2:1 to 1:2). These high levels of graphite flakes are said to be required for effective reduction in thermal conductivity. In the example equal weights of carbon fibre and graphite flakes are used.

FR 842585, published in 1939, describes a similar system without graphite. Silicate-based fibres, especially glass fibres, are described for use as thermal insulation and as filters for gas and liquid. The authors state that they are concerned with providing a resistant binder. To do this, a carbon-containing material such as starch is mixed with the fibres which are then heated in the absence of oxygen, at a temperature of from 300 to 350°C. This, as also discussed in US 3,793,204, results in binding of the fibres with a binder formed of carbonised starch.

WO92/09538 describes a material suitable as insulation in the casting of aluminium and in which the components include large amounts of lime together with lesser amounts of various other materials including pitch-based graphitic fibre in order to improve mechanical toughness, machinability and high temperature strength and to reduce high temperature cracking. MMVF fibres are not included.

For conventional thermal insulation use, for instance in the walls and roofs of buildings, dense products of these types are generally unsuitable and, instead, lower density, air-laid, MMVF batts are used. These are made by air-laying the MMV fibres as a web and converting the web to a batt, for instance by some combination of cross-lapping, compressing and curing bonding agent in the web. Typical thermal insulation materials of this type have densities from 10 to 300 kg/m³, for instance commonly below 180 kg/m³.

The thermal conductivity properties depend on a number of factors including the chemical analysis of the fibre, the range of fibre sizes, the degree of oversize particles, and the density of the batt.

There have been various proposals to improve the thermal conductivity or λ value of any particular MMVF batt by including various additives in the batt. For instance, as long ago as 1937 it was proposed in DK 56910 to improve the insulating properties of glass filaments or silicate, mineral or slag filaments in the form of a wool by including a powdered substance which surrounds the filaments and wholly or partially fills the spaces between them. It was proposed to use metal powder, especially aluminium powder, or calcium fluoride for insulation at high temperatures of around 500°C, or carbon, soot, rouge or bentonite for insulation at temperatures of around 100°C. In the subsequent 60 years, such proposals have not proved technically or commercially useful.

A further publication, from 1961, US 3,014,872, describes materials such as fibreglass or mineral wool in which additives have been included in order to improve the thermal characteristics of the material. It is particularly concerned with reducing heat conductivity at high temperatures. Additives are said to be blown into the loosely matted product. Various materials are suggested which are silicon, germanium, carbon black and fibrous potassium titanate. Results for silicon powder are given and, as with US 3,793,204 above, the amount used is high, approximately 25% by weight. An amount of from 20 to 50% by weight of the product is said to be essential. It is stated that it is important that the powdered material adheres lightly to the fibres, for instance by electrostatic attraction. The material is exemplified as insulation for an oven in an electric range. Temperatures of 1,160°F (about 627°C) are mentioned. Again, in the nearly 40 years since publication of this disclosure, it has not proved technically or commercially useful.

A different type of product is described in EP-B-500,900. This is produced by producing glass wool panels and subjecting them to vacuum whilst encapsulating them. A particulate material is included which must have a surface area at least 50 m²/g (by BET). Fumed and precipitated silica are exemplified and preferred, although other silicas and graphite are mentioned in the description. The use of very fine particles is important in the context of this type of vacuum produced product. The product must be free of binder, especially organic binder.

It is also known to include graphite fibres blended with organic fibres, or organic fibres containing graphite, in various structures in order to improve the mechanical properties of those structures (see for instance US 4,833,013). However, all of this is unrelated to the problem of improving the thermal insulation properties of air-laid MMVF thermal insulation.

According to the invention we provide a thermal insulation product which comprises air-laid MMVF material, characterised in that graphite is distributed substantially homogeneously throughout the MMVF material and is bonded to the surfaces of the fibres by an organic binder.

The product may thus be a granulated MMVF material or batt. In the following where we discuss aspects of the invention relating to the batt these may be applied to the granulate wherever appropriate.

The product may comprise only MMVF containing the graphite or may have MMVF regions without it (eg in the case of a batt having a graphite-containing layer). Preferably the MMVF part of the product consists essentially of MMVF having homogeneously distributed graphite.

A preferred thermal insulation product according to the invention comprises a layer which is an air-laid MMVF batt or batt stratum, characterised in that graphite is distributed substantially homogeneously throughout the layer.

This product may comprise a batt having graphite distributed substantially homogeneously throughout most or all of the batt, in which event the defined layer substantially has the thickness of the batt. However the products of the invention include those in which the layer is a stratum of the batt, that is to say it is a layer within a batt. For instance the batt stratum, that is to say the layer which contains graphite, may be from 10 to 80%, often 10 or 20% to 50%, of the thickness of the entire batt. Batts of the invention may comprise more than one layer in which graphite is homogeneously distributed. The layer or layers are disposed perpendicular to the expected direction of heat transfer.

The graphite can be distributed uniformly throughout the layer or there may be a concentration gradient. Irrespective of whether or not there is a concentration gradient, the graphite is distributed substantially homogeneously in the sense that it should be sufficiently uniformly distributed throughout the volume of the batt (or batt stratum) to minimise the risk of significant amounts of radiation being able to pass through the layer without encountering graphite. Accordingly the areas of the layer which are substantially free of graphite should be as low. as possible.

Preferably the MMVF product is a bonded product and comprises organic binder, which bonds the graphite to the surfaces of the MMVF fibres.

It is possible, with the invention, to obtain a significant improvement (reduction) in λ by including the graphite. This is in distinct contrast to, for instance, the bentonite, rouge, carbon or soot proposed in DK 56910 or the carbon black proposed in US 3,014,872. For instance it is easy, by the invention, to reduce the λ value of a batt by at least 0.5 units (eg from 35.5 mW/mK down to 35.0) and generally by at least 0.8 or 1 unit (eg 1 to 3 units or more).

In general it is well known that air-laid MMVF insulation products generally show a decrease in λ as density increases (to an eventual minimum at very high density). Thus in the invention it is possible to provide a product of equivalent density but lower λ and hence better thermal insulation, or a product with equivalent λ and thermal insulation properties at lower density. Further, a lower thickness can be used to give equivalent insulation value. Thus it is possible to improve insulation properties in a given situation, which is of course beneficial, and it is also possible to obtain equivalent insulation behaviour with a product of lower density or with lower thickness of insulation. The latter system is of particular value for use in aeroplanes and other vehicles because of the ability to reduce weight and thus reduce fuel requirements for the vehicle.

The ability to provide lower density also gives transportation and storage advantages. Lower density products have greater compressibility. However, they also retain good recovery. Therefore a lower density product can be compressed to reduce its volume for transportation and then recover substantially all of its original thickness for use. For instance it may recover to the thickness of a product containing no graphite. The invention allows the achievement of lower density (and hence higher compressibility) at equivalent or even better λ value. For instance, a product according to the invention and containing graphite can be provided at a density of 29 kg/m³ with λ₁₀ thermal conductivity at 10°C of 34 mW/mK, in contrast to a product not containing any graphite which has density of 36 kg/m³ but the same λ value. The compressibility of the 36 kg/m³ product is 20% whereas the compressibility of the 29 kg/m³ product is 30%. Thus the 29 kg/m³ product may be transported more efficiently and does not have impaired recovery.

Thus preferred products of the invention, especially products which are a batt, are products which have been compressed by at least 25%, preferably at least 30%. The density before compression is preferably not more than 30 kg/m³. The product is preferably releasably compressed, ie when the compression force is removed it recovers substantially all of its pre-compression thickness (for instance at least 70% of its pre-compression thickness). Such compressed products are often usefully produced for transportation and storage purposes. The invention also includes the production of a product of the invention, especially a batt product, having density of not more than 30 kg/m³ and compression of that product by at least 25%, preferably at least 30%. In these aspects of the invention the λ₁₀ of the pre-compressed product is preferably not more than 45 mW/mK, more preferably not more than 40 or 37 mW/mK.

The product of the invention contains graphite. As is well known, graphite is characterised by its layered lattice structure. Various forms of graphite are known, in which the lattice structure may not match exactly the perfect lattice structure but nevertheless is predominantly of this characteristic structure. The graphite of the invention may be natural graphite, for instance various graphites available from, e.g., the company Edelgraphite. Graphite can also be produced synthetically and synthetic graphite may also be used in the invention. For instance it may be produced in an electric furnace using petroleum, coke or anthracite as a starting material.

The graphite can be included in the layer in any physical form which gives the desired improvement. It is usually preferred for the graphite to be in the form of particles rather than fibres. It is especially preferred that the particles are lamellar (platelets).

According to the invention particularly beneficial results can be achieved by selecting the particle size range for the graphite.

Particle size can be measured by a laser scattering technique. Suitable equipment for such techniques include those available from, e.g., Malvern Instruments and Sympatec Helos. The laser scattering technique provides various size and size distribution properties. In the invention the average particle size is the volume median diameter, often described as d₅₀. This is the median value in the volume distribution calculated by the laser scattering method. This value is commonly used by suppliers of particulate graphite and other particulate materials to denote average particle size.

Preferably this average particle size is not more than 100 µm, more preferably not more than 20 µm and in particular not more than 10 µm, especially not more than 5 µm. Particularly good results can be achieved with particles of average size not more than 4 µm, and in particular not more than 3 µm.

The average particle size is usually at least 0.01 µm and generally at least 0.1 or 0.5 µm. Best results are generally obtained when the average particle size is between about 0.5 and 10 µm, preferably about 1 to 3 or 4 µm.

It is also preferred that the d₉₀ value (ie 90% of the particles in the volume distribution are below this value) is not more than 20 µm, in particular not more than 10 µm, preferably not more than 8 µm. Particularly good results can be achieved when d₉₀ is not more than 6 µm.

Preferably d₁₀ (ie 10% of particles in the volume distribution are below this value) is at least 0.1µm, more preferably at least 0.5µm, in particular at least 0.8 or 1µm.

Good results can also be achieved by selecting appropriate surface area values, in particular in combination with the preferred particle size ranges above. Surface area can be calculated from the laser scattering measurements obtained by the above methods. In this case, surface area is generally above 0.1 m²/g, preferably above 0.5 m²/g. Preferably it is at least 0.8 m²/g. It may range up to 3 m²/g or higher.

An alternative and preferred method for measuring surface area is the well known BET method (described in DIN 66131). This provides a specific surface area value. When measured by this method the surface area is generally above 0.5 m²/g, preferably above 1 m²/g. More preferably it is at least 10 m²/g, most preferably at least 20 m²/g. It may range up to 30 m²/g or higher but is preferably not more than 40 m²/g, more preferably not more than 30 m²/g.

The graphite is preferably of reasonable purity, and ash content is preferably below 20%, more preferably below 15%. Good results are obtained with ash content not more than 12%, in particular below 10%. However, it is not essential that graphite of extremely high purity is used, and ash content may be at least 2 or 5%.

The amount of graphite in the layer is usually at least 0.2% by weight of the layer in order to give a useful increase in performance, and is generally at least around 0.4 or 0.5% by weight. Preferably it is at least 1% by weight. The amount is generally not more than 15%, preferably not more than 10% and in particular is not more than 6%. For rock, stone or slag wool fibres in particular the amounts are preferably lower. In this case the amount is preferably not more than 10%, preferably not more than 7% or 6%, and in particular is not more than 4% or 3.5%. It is particularly surprising in view of the disclosures in prior art references of the necessity for amounts of other additives of 20% or greater that with the selection of graphite in the invention we can achieve excellent results with such low amounts. Preferred amounts are from 0.5 to 15%, more preferably 1 to 9% by weight of the layer. For rock, stone or slag wool in particular the amounts are preferably 0.5 to 7%, more preferably 1 to 4 or 5%.

The MMV fibres can be any man-made vitreous fibres which are suitable for the production of low density thermal insulation. Accordingly the fibres can be glass, rock, stone or slag fibres. The fibres can have any suitable dimensions, for instance those which are conventional in the production of low density and thermal insulation products. Generally the average fibre diameter is below 10 µm, eg below 5 µm, and can be the same as conventional fibre diameter or less.

The batt or granulate generally consists substantially only of MMV fibres, graphite and minor additives such as binder and oil. The product is usually free of combustible or organic fibres.

The granulate or batt, and the or each layer which consists of part or all of the thickness of the batt, must be low density, and in practice usually has a density of below 300 kg/m³ and preferably below 150, and most preferably below 120 kg/m³. Density is usually at least 5, preferably at least 7 kg/m³. Preferably it is from 10 to 150 kg/m³.

We find that particularly good improvements in λ value can be obtained when the density is 60 kg/m³ or less, for instance not more than 40 kg/m³, in particular not more than 30 kg/m³. Suitable applications for materials having density in this range are general building insulation. The invention can thus be beneficial in applications in which the product is required to have very low density, such as flight insulation (eg from 10 to 20 kg/m³). The density may be below 10 kg/m³, for instance from 5 to 8 kg/m³.

The invention also gives benefits in products having density greater than about 40 kg/m³ and these include building insulation products where high strength is required, lamellar products and technical insulation.

An advantage of the invention is that it may be applied at a wide range of temperatures. The products may be used for high temperature insulation above 300°C, for instance up to 500 or 800°C. However the product is also useful for improving insulation properties at low temperatures, for instance down to -80°C, for instance down to -20°C. It is particularly beneficial and surprising that the graphite gives improved insulation across this entire range.

One preferred range for use in the invention is from - 80°C to 30°C. Products of the invention can be used at such temperatures in applications such as flight insulation and cold storage.

The invention is also useful for applications such as building insulation and technical insulation (e.g. insulation of pipes for hot water or ventilation) at temperatures of from -30 to 100°C.

A further range of high temperatures at which the invention is useful is from 80 to 300°C. Suitable applications include technical insulation (e.g. for boilers and steam pipes).

The invention may also be used to give effective insulation at temperatures above 300°C, for instance up to 800°C. We find that under some conditions (especially when the product is exposed to oxygen) the graphite on the hot side of the insulating product may degrade, in a stable and controlled manner. As a result, after weeks or months of use, the product equilibrates so that the graphite in the batt or layer closest to the hot side is no longer present but a layer on the cold side remains stable over the period of use. The amount and distribution of the graphite in the batt or stratum can be selected to take into account this effect. We also find that this effect does not occur in oxygen-free atmospheres and the invention is particularly suitable for use in these environments at high temperatures above 300°C.

The graphite particles may be provided with a coating if desired. This can provide added stability. Suitable coating agents include acrylic polymers.

The graphite may be held in the product or layer merely by physical interaction between the graphite and the MMV fibres of which the batt or granulate is formed. However, it is generally highly preferred to bond the graphite into the batt (or granulate) using a binder. We find that this is beneficial, in contrast with the teaching in, for instance, US 3,014,872 that where electrostatic attraction is preferable. The graphite is bonded to the surfaces of the MMVF fibres. The binder can be included primarily for the purpose of bonding the graphite into the batt or granulate, but generally the product is itself a bonded product in which event part or all of the binder for the product can conveniently also serve as binder for the graphite.

Amounts of binder can be the amount which would be used if the product were to contain no graphite. However, preferably additional binder is included in order to aid bonding of the graphite into the product. We find that additional amounts, above those which would be used for a graphite-free equivalent product, of from 0.1 to 1 parts binder to 1 part graphite (by weight), preferably 0.15 to 0.5 parts, more preferably 0.2 to 0.3 parts binder (e.g. about 0.25 parts binder), are especially beneficial. The total amount of binder is preferably at least 0.5% by weight of the product, more preferably at least 1% by weight of the product.

Suitable amounts of binder are 0.1 to 20 or 10%, generally 0.5 to 7%, preferably 1 to 5%, by weight binder solids based on the dry weight of the product. The binder is applied as an aqueous solution and the graphite can be included as a suspension in this solution.

The binder for the graphite can be inorganic such as sodium or potassium or lithium silicate, silicophosphate, monoaluminium phosphate or silica sol.

often the binder for the graphite is organic and can be any of the conventional curable or non-curable binders which are known for MMVF batts. Suitable binders include binders based on phenol, urea, resorcinol, furanic binders or melamine, and in particular resins formed by reacting the above with formaldehyde. Curable and non-curable acrylic binders, polyvinyl acetate, polyamides, polyimides, polyamides/-imides, polyesters, modified starches, chitosan, dopa, tannin, xanthan or other gums, cellulose derivatives, alginates, thermoplastics, and mixtures thereof may be used. The amount of organic binder is usually not more than 20%, preferably not more than 10%, and generally not more than 7%, with preferred amounts being below 5%. These percentages are by weight binder solids based on the dry weight of the batt. Inorganic and organic binders may also be used in combination. The graphite can be included as a suspension in the aqueous binder. Mixtures of organic and inorganic binders can be used.

The dry weight of the total organic binder in the final batt is preferably below 10%, usually below 7%, and more preferably below 4 or 5% by weight.

In the invention we find it is not necessary (as, for instance, in US 3,793,204 above) to orient the graphite particles. In the invention they may be, and preferably are, randomly oriented within the or each layer or the batt, or the granulate.

The thermal insulation product may consist solely of the batt or granulate. Thus it can consist of either the batt containing graphite distributed throughout its thickness or a batt stratum which contains graphite and which is integral with the remainder of a batt which is otherwise free of graphite. However if desired a batt product can comprise other materials, for instance one or more other air-laid MMVF batts and/or decorative or structural materials such as foil.

The term "batt" includes very flexible roll products such as those used for insulation for pipes or boiler insulation, as well as less flexible (or even inflexible) products such as those in the form of slabs.

The batt product can be shaped in conventional shapes, for instance pipe sections for use as insulation for pipes or for boiler installations or for general building insulation. Accordingly, the product can have shapes such as cylindrical, part cylindrical or substantially rectangular slabs and rolls.

The invention is also useful when the product is not in the form of a batt but is in the form of granulated material such as is used for general building insulation. These materials are generally formed by granulating preformed batts and are thus produced by a process comprising formation of a batt.

Although the products of the invention are particularly beneficial in thermal insulation applications, they may also be used in other applications for which MMVF products are known, for instance fire protection and prevention and acoustic insulation.

The batt can be made in conventional manner, for instance by forming a cloud of man-made vitreous fibres entrained in air by fiberising mineral melt into an air stream and air-laying the fibres on to a collector as a web, and converting the web to a batt in conventional manner. This conversion can involve, for instance, cross-lamination of the web and drying, melting or curing of any binder that is present.

In the invention, graphite can be distributed through some or all of the thickness of the eventual batt by including graphite in part or all of the cloud of fibres. Depending upon how the graphite is distributed within the cloud, it will then be uniformly distributed throughout the web or will be distributed through part only of the web. It is then possible, in conventional manner, to form a batt which either has graphite distributed throughout its thickness or through part only of its thickness. Suitable systems include those described in our International Patent Application WO99/51536.

The graphite can be included in the cloud of fibres either by injecting the graphite into the cloud, either from around or within the cloud, or by injecting the graphite into the cloud during the formation of the fibres.

For instance the mineral melt is generally fiberised using either a centrifugal fiberising apparatus such as a disk or cup which rotates about a substantially vertical axis or a cylinder or disk which rotates about a substantially horizontal axis. In the latter case it is usually a cascade of cylinders which is used. This initially forms an annular cloud of fibres, and the graphite can be injected into the centre of this annular cloud from the centrifugal fiberising apparatus.

Preferred apparatus and methods are described in our International Patent Publications WO97/20779 and WO97/20781. These apparatus and methods are particularly useful when the graphite has particle size from 5 µm and up.

Finer particles may be distributed using a conventional centrifugal distribution means which is attached to and rotates coaxially with one or more of the cylinders or via spray nozzles placed inside or outside the annular cloud (such as are used as conventional binder supply nozzles).

This process of the invention is especially beneficial because the graphite is added in simple and convenient manner. There is no need to devise additional processing steps. Furthermore, uniform and homogeneous distribution of the graphite is promoted by its inclusion during formation of the fibres, rather than after collection (as in US 3,014,872).

The graphite may be added as a powder or as a slurry in water or as a slurry in aqueous binder. The aqueous binder may be the binder for the batt or a separate aqueous binder solution. The graphite may be added partly with the binder for the batt and partly with a separate binder solution.

We find benefits when the graphite is added as a slurry in a liquid in which is included a dispersing agent. Suitable dispersing agents include low molecular weight acrylic and maleic polymers and copolymers. Preferably the amount of dispersing agent in the slurry is 0.1 to 2%, preferably 0.1 to 1.0%, dry weight dispersing agent based on weight of slurry.

The graphite slurry may also include defoamer (antifoaming agent) in an amount of from 0.01 to 2 wt %, preferably 0.1 to 1.0 wt %, by weight of slurry; and/or 0.05 to 2 wt %, preferably 0.1 to 0.5 wt %, by weight of slurry, of anti-settling agent.

When the slurry is added separately from the binder for the product, the amount of graphite in the slurry is preferably from 10 to 60%, preferably 20 to 50% by weight graphite based on weight of slurry. When the graphite is added with the binder for the product, a slurry of this concentration is generally first produced and then mixed with the binder for the product. In that case, the eventual amount of graphite in the slurry applied to the fibres may be as low as 0.5%, but is often at least 0.8% and preferably at least 2%.

Another (less preferred) way of making the products of the invention is by collecting the web of fibres (without prior addition of graphite) and then impregnating the graphite into the web, for instance on the collector, and then converting the web to the batt.

Another way of making the products is by forming a batt in conventional manner, for instance as described above, and then impregnating part or all of the thickness of the batt with graphite. This method is less preferred since a uniform distribution can be difficult to obtain except for thin layers.

In these techniques also the graphite may be added as powder or as a slurry in water or as a slurry in aqueous binder (either the binder for the batt or a separate aqueous binder solution).

The amounts of graphite added (by weight based on weight of fibres produced) may be those discussed above for the amount of graphite in the product. In practice we find that the amount of graphite present in the final product is about 75% of the amount added.

Preferred methods of making the products of the invention include those described in our co-pending Application WO00/17123. In this process the product is made using apparatus comprising
a set of at least three rotors mounted on a housing each for rotation about a different substantially horizontal axis and arranged such that when the rotors are rotating melt poured onto the periphery of the top rotor in the set is thrown onto the periphery of each subsequent rotor in turn and fibres are thrown off the rotors,
air supply means for blowing the fibres axially along the chamber and which comprise a primary air supply slot associated with each subsequent rotor wherein each slot has an internal diameter substantially the same as the external diameter of the periphery of its associated rotor and is constructed for discharging a primary air blast substantially parallel to that periphery as a wall jet, and
additive supply means on or adjacent the spinner, preferably at least one additive discharge orifice on each (or any) of the subsequent rotors positioned within the periphery of the rotor and rotating with the rotor, for spraying additive outwardly onto the fibres as they are thrown off the rotor and are carried forward from the rotor,
and in which process fibres are formed by pouring melt onto the top rotor while the rotors are rotating, the air blasts are being. discharged and the additive is being sprayed outwardly, and thereby forming a cloud of fibres and additive travelling forwards from the spinner, and collecting the fibres and additive from the cloud as a web, and if necessary converting the web to the insulation product,
and in which the additive comprises graphite and each air blast emerges from the air supply orifice with a velocity of at least 100m/sec.

The product and the graphite may have any of the preferred features discussed above.

We find that this process can lead to even greater improvements in λ value.

Typical products of the invention made from rock, stone or slag wool by centrifugal fiberising apparatus (such as a cascade spinner) comprise 60 to 75 wt% fine mineral fibre, 2 to 4 wt% binder and 23 to 36 wt% shots (for instance having an average size above 63 µm).

Lamellar graphite particles may usefully (in a further aspect of the invention) be added to organic fibre insulation products. Amounts, sizes, surface areas and other preferred features are as above where applicable. Suitable fibres include paper or wood pulp fibres, wool, cotton, flax and straw.

The graphite may usefully be combined with other particulate additives, such as silica, titanium oxide, silicon, mica, aluminium particles (eg flakes) and mixtures thereof. Aluminium is preferred.

These materials are even more stable at high temperatures than the graphite and are particularly beneficial in combination with graphite at temperatures above 300°C, in an environment in which the product is exposed to oxygen. As discussed above the graphite will gradually degrade from the product on the hot side, leaving an equilibrated layer on the cold side, but if an additional material is included this remains in the region from which the graphite has been removed.

Suitable amounts of these further additives are up to 15%, preferably not more than 10% and more preferably not more than 6%. When a mixture of graphite with another additive or additives is used, the ratio of graphite to other additives is preferably from 99:1 to 50:50, in particular from 95:5 to 60:40.

The following are examples.

### Example 1

225 ml of a 25% aqueous, phenolic, curable binder is mixed with 200 ml tap water followed by 5 ml dispersing agent which is a sodium salt of maleic acid-olefin copolymer (available from BASF under the tradename Sokalan CP9). 150 g graphite having an average particle size (d₅₀) of 2.8 µm and a surface area (measured by laser scattering method) of 1.2 m²/g is slowly added while stirring. The rate of stirring is increased until a homogeneous dispersion is formed. This dispersion is stable for several days.

A mineral melt is fiberised using a cascade spinner of conventional type having at least three substantially cylindrical rotors mounted for rotation about a horizontal axis, whereby melt poured onto the top rotor is thrown from one rotor to the next in series and is fiberised. An airstream flows from the rotors in conventional manner to carry the fibres as a cloud towards a permeable inclined collector, where the fibres are collected as a web in conventional manner.

The aqueous binder and graphite slurry is injected into the cloud as it is formed using the conventional binder supply tubes on the fibre forming apparatus.

The web is then cross-lapped to form an uncured batt. This is then passed through an oven to cause curing.

### Example 2

In this Example, the graphite and binder are not mixed into the aqueous phenolic binder. Instead, the graphite is dispersed in an aqueous solution of the binder and this is then injected through sprays into the cloud of fibres separately from the phenolic binder.

### Example 3

Three products are made using the same melt and fiberising conditions, broadly as described in Example 1. In each instance the web is cross-lapped and the product is then cured to form the desired batt.

In reference 1, the phenolic binder is used, but without any addition of graphite.

In test 1, the binder and graphite are added as shown in Example 1 and the amount of graphite added is 2 wt% of the fibres formed. As discussed above, the amount in the final batt itself will be about 75% of the amount added. In test 2, the amount of graphite added is 4 wt% (and the average density of the batt happened to be slightly lower).

The thermal conductivity of each of the products, λ, was measured at 10°C in accordance with the ISO 8301 norm. The results are shown in the following Table 1.

**Table 1**

| Sample | No. of samples | ρ [kg/m³] | λ measured [mW/mK] |
|---|---|---|---|
| Ref. 1 | 4 | 28.7 | 36.2 |
| Test 1 | 15 | 28.7 | 34.9 |
| Test 2 | 8 | 26.2 | 34.8 |

It is apparent that the inclusion of graphite significantly reduces λ.

### Example 4

This example demonstrates the benefit of the invention in various product types.

### 1. Rolls

Rolls with a density of 20.4 kg/m³, a thickness of 100 mm, a binder content of 2 wt.% and a λ value of 39.8 mW/mK. With 3 wt.% added graphite the λ value is reduced to 37.2 mW/mK while 6 wt.% added graphite reduces the λ value to 35.6 mW/mK.

### 2. Granulate

(a) Granulate with a density of 22.5 kg/m³, a binder content of 1.5 wt.% and a λ value of 45mW/mK. With 4.5 wt.% added graphite the λ value is reduced to 39.5mW/mK.
(b) Granulate with a density of 22.8 kg/m³, a binder content of 2 wt.% and a λ value of 43 mW/mk. With 3 wt.% added graphite the λ value is reduced to 40.6 mW/mK while 6 wt.% added graphite reduces the λ value to 39.5 mW/mK.

### 3. Sprayed Granulate

An on-site mixed granulate for "spraying" installation. Can be used for installation in a density range of 30 to 100 kg. With a density of 30.2 kg/m³ the λ value of the sprayed granulate is 38.6mW/mK. When sprayed, to the granulate is added 20 wt.% of a dispersion of 3 wt.% PVA binder and 25 wt.% graphite in water (thus the amount of added graphite is 4 wt.%). The λ value is reduced to 37.0mW/mK.

### 4. Pipe Section ρ-60 kg/m³, λ₄₀=40mW/mK

A pipe section of lamellar product with a density of 61.2 kg/m³ having a λ₄₀ (λ at 40°C) value of 39.8mW/mK. When 3wt.% graphite is added with the binder the λ₄₀ value is reduced to 38.4mW/mK.

### Example 5

73 kg of a 20% aqueous, phenolic curable binder is mixed with 77 l tap water followed by 1.4 kg dispersing agent which is a sodium salt of maleic acid-olefin copolymer (available from BASF under the tradename Pigmentverteiler MD 20) and 0.4 kg defoamer which is an aromatic mineral oil with added silica and acrylic polymer (available from Henkel-Nopco under the tradename NOPCO 8034-M). The liquid is slowly mixed for 5 min. 51 kg graphite having an average particle size of 2.8 µm and a surface area of 1.2 m²/g (measured by laser scattering) is slowly added while stirring. The rate of stirring is increased and the batch is dispersed for 15 min. This dispersion is stable for several days.

A mineral melt is f iberised using a cascade spinner of conventional type having at least three substantially cylindrical rotors mounted for rotation about a horizontal axis, whereby melt poured onto the top rotor is thrown from one rotor to the next in series and is fiberised. An airstream flows from the rotors in conventional manner to carry the fibres as a cloud towards a permeable inclined collector, where the fibres are collected as a web in conventional manner.

The aqueous binder and graphite slurry is injected into the cloud as it is formed using the conventional binder supply tubes on the fibre forming apparatus.

The web is then cross-lapped to form an uncured batt. This is then passed through an oven to cause curing.

### Example 6

70 l tap water is mixed with 1.2 kg dispersing agent, 500 g defoamer and 100 g anti-settling agent which is hydroxyethylcellulose (available from Hercules under the tradename Natrosol 250 HBR). 23 kg graphite is slowly added and the mixture is dispersed for 20 min. This slurry is then injected through sprays into the cloud of fibres using the conventional binder supply tubes on the fibre forming apparatus. All ingredients are the same grade as in Example 5.

### Example 7

33 kg 20% phenolic binder is mixed with 18 l tap water and 14 kg graphite is added slowly and the mixture is dispersed for 20 min.

The aqueous binder and graphite slurry is injected into the cloud of fibres as it is formed separately from the phenolic binder. All ingredients are the same grade as in Example 5.

### Example 8

137 kg of 20% aqueous, phenolic, curable binder is mixed with 137 l tap water followed by 2.9 kg dispersing agent and 3.60 kg defoamer. The liquid is slowly mixed for 5 min. 54 kg graphite and 72 kg silicon is slowly added while stirring. The mixture is dispersed for 20 min.

The aqueous binder and graphite/silicon slurry is injected into the cloud of fibres as it is formed using the conventional binder supply tubes on the fibre forming apparatus.

### Example 9

A further test is carried out using graphite and other additives, added substantially as in Example 5. Results are in Table 2 below.

**Table 2**

| Sample | Additive | Density (kg/m³) | λ measured (mW/mK) | Δλ (mW/mK) |
|---|---|---|---|---|
| Ref 2 | - | 29.5 | 35.4 | - |
| Test 3 | 3 wt.% graphite 3 wt.% silica | 29.4 | 33.9 | 1.5 |

### Example 10

A further test is carried out using a graphite of d₅₀ = 10 µm, substantially as in Example 1. Results are as follows.

**Table 3**

| Sample | Additive | Density (kg/m³) | λ measured (mW/mK) | Δλ (mW/mK) |
|---|---|---|---|---|
| Ref 2 | - | 29.5 | 35.4 | - |
| Test 4 | 2 wt.% graphite d₅₀ = 10 µm | 30.7 | 34.9 | 0.5 |

## Claims

1. A thermal insulation product comprising air-laid man-made vitreous fibre material throughout which graphite is distributed substantially homogeneously, and the graphite particles are held in the man-made vitreous fibre material by being bonded to the surfaces of the man-made vitreous fibres by an organic binder.

2. A thermal insulation product according to claim 1 comprising a layer which is an air-laid man-made vitreous fibre batt or batt stratum **characterised in that** graphite is distributed substantially homogeneously throughout the layer.

3. A product according to claim 1 or claim 2 in which the graphite is in the form of lamellar particles.

4. A product according to claim 3 in which the graphite particles have a volume median particle size d₅₀ measured by a laser scattering technique of not more than 12 µm, preferably not more than 5 µm, more preferably not more than 3 µm.

5. A product according to claim 3 in which the graphite particles have a volume median particle size d₅₀ measured by a laser scattering technique of at least 0.5 µm, preferably at least 1 µm.

6. A product according to any of claims 3 to 5 in which the graphite particles have a surface area measured by a laser scattering technique of at least 0.3 m²/g, preferably at least 0.8 m²/g, more preferably at least 1 m²/g.

7. A product according to any of claims 3 to 5 in which the graphite particles have a surface area measured by BET of at least 0.5 m²/g, preferably at least 5 m²/g, more preferably at least 15 m²/g.

8. A product according to any of claims 3 to 7 in which the graphite particles have a surface area measured by BET of not more than 40 m²/g, preferably not more than 30 m²/g.

9. A product according to any preceding claim in which the graphite is natural graphite.

10. A product according to claim 3 in which the man-made vitreous fibre material is bonded by an organic binder which holds the graphite particles in the layer.

11. A product according to any preceding claim in which the amount of graphite is not more than 15%, preferably not more than 10%, and more preferably not more than 6% by weight based on weight of the man-made vitreous fibre material through which it is distributed homogeneously.

12. A product according to any preceding claim which has a density of not more 300 kg/m³, preferably not more than 150 kg/m³, more preferably not more than 60 kg/m³, most preferably not more than 40 kg/m³.

13. A product according to claim 2 which has been releasably compressed by at least 25%, preferably at least 30%.

14. A product according to claim 1 which is a granulated MMVF product.

15. Use of a product according to claim 1 as a thermal insulation product, preferably at a temperature of from -80 to 800°C.

16. Use according to claim 15 at a temperature of from -80 to 30°C.

17. Use according to claim 15 at a temperature of from -30 to 100°C.

18. Use according to claim 15 at a temperature of from -20 to 300°C.

19. Use according to claim 15 at a temperature of from 80 to 300°C.

20. A process of making a product according to claim 1 or claim 2 comprising forming a cloud of man-made vitreous fibres entrained in air by fiberising mineral melt into an air stream, including an organic binder and graphite in part or all of the cloud of fibres, air-laying the fibres and graphite on a collector as a web, and converting the web to a batt.

21. A process according to claim 20 in which the graphite is included in an amount of not more than 15%, preferably not more than 10%, more preferably not more than 7%, weight graphite based on weight of fibres produced.

22. A process according to claim 20 in which the graphite is included in the cloud as a dispersion of graphite in aqueous binder for the batt.

23. A process according to claim 20 in which the graphite is included in the cloud as a dispersion of graphite in aqueous binder separate from the binder for the batt or as a slurry in water.

24. A process according to claim 20 in which the graphite is included in the cloud as a powder.

25. A process according to claim 20 in which the graphite is included in the cloud as a dispersion of graphite in aqueous binder or in water, in which the dispersion also contains a dispersing agent, preferably in an amount of from 0.1 to 2% by weight of the dispersion.

26. A process according to claim 20 in which the graphite is included in the cloud as a dispersion of graphite in aqueous binder or in water, in which the dispersion also contains a defoamer, preferably in an amount of from 0.01 to 2% by weight of the dispersion.

27. A process according to claim 20 in which the graphite is included in the cloud as a dispersion of graphite in aqueous binder or in water, in which the dispersion also contains an anti-settling agent, preferably in an amount of from 0.05 to 2% by weight of the dispersion.

28. A process according to claim 20 or claim 21 in which the graphite is included in the dispersion in an amount of 0.5 to 50%, by weight of the dispersion.

29. A process according to claim 20 comprising compressing the batt by at least 25%, preferably at least 30%.

30. A product according to any of claims 1 to 14 in which the man-made vitreous fibre material additionally comprises a further particulate additive selected from the group consisting of silica, titania, silicon, mica, aluminium and mixtures thereof.

31. A product according to claim 30 in which the additive is aluminium, silicon or mica.

32. A use according to any of claims 15 to 19 in which the man-made vitreous fibre material additionally comprises a further particulate additive selected from the group consisting of silica, titania, silicon, mica, aluminium and mixtures thereof.

33. A process according to any of claims 20 to 29 in which the man-made vitreous fibre material additionally comprises a further particulate additive selected from the group consisting of silica, titania, silicon, mica, aluminium and mixtures thereof.

## Patentansprüche

1. Wärmeisolierprodukt umfassend ein im Luftstrom gelegtes, künstliches, glasartiges Fasermaterial, in dem Graphit im wesentlichen homogen verteilt ist und die Graphitteilchen in dem künstlichen, glasartigen Fasermaterial gehalten werden, indem sie durch ein organisches Bindemittel an die Oberflächen der künstlichen, glasartigen Fasem gebunden sind.

2. Wärmeisolierprodukt nach Anspruch 1 umfassend eine Schicht, die ein im Luftstrom gelegtes, künstliches, glasartiges Faservlies oder eine im Luftstrom gelegte, künstliche, glasartige Vlieslage ist, **dadurch gekennzeichnet, dass** Graphit im wesentlichen homogen in der ganzen Schicht verteilt ist.

3. Produkt nach Anspruch 1 oder Anspruch 2, in welchem Graphit in Form von lamellaren Teilchen vorliegt.

4. Produkt nach Anspruch 3, in weichem die Graphitteilchen einen Volumenmedian der Teilchengröße d₅₀, gemessen durch eine Laserstreuungstechnik, von nicht mehr als 12 µm, vorzugsweise nicht mehr als 5 µm und bevorzugter nicht mehr als 3 µm aufweisen.

5. Produkt nach Anspruch 3, in welchem die Graphitteilchen einen Volumenmedian der Teilchengröße d₅₀, gemessen durch eine Laserstreuungstechnik, von mindestens 0,5 µm und bevorzugt mindestens 1 µm aufweisen.

6. Produkt nach irgendeinem der Ansprüche 3 bis 5, in weichem die Graphitteilchen eine Oberfläche, gemessen durch eine Laserstreuungstechnik, von mindestens 0,3 m²/g, vorzugsweise mindestens 0,8 m²/g und bevorzugter mindestens 1 m²/g aufweisen.

7. Produkt nach irgendeinem der Ansprüche 3 bis 5, in weichem die Graphitteilchen eine Oberfläche, gemessen nach BET, von mindestens 0,5 m²/g, vorzugsweise mindestens 5 m²/g und bevorzugter mindestens 15 m²/g aufweisen.

8. Produkt nach irgendeinem der Ansprüche 3 bis 7, in weichem die Graphitteilchen eine Oberfläche, gemessen nach BET, von nicht mehr als 40 m²/g und bevorzugt nicht mehr als 30 m²/g aufweisen.

9. Produkt nach irgendeinem vorhergehenden Anspruch, in welchem der Graphit natürlicher Graphit ist.

10. Produkt nach Anspruch 3, in welchem das künstliche, glasartige Fasermaterial durch ein organisches Bindemittel gebunden ist, welches die Graphitteilchen in der Schicht hält.

11. Produkt nach irgendeinem vorhergehenden Anspruch, in weichem die Menge an Graphit nicht mehr als 15 Gew.-%, vorzugsweise nicht mehr als 10 Gew.-% und bevorzugter nicht mehr als 6 Gew.-%, bezogen auf das Gewicht des künstlichen, glasartigen Fasermaterials, durch das er homogen verteilt ist, beträgt.

12. Produkt nach irgendeinem vorhergehenden Anspruch, welches eine Dichte von nicht mehr als 300 kg/m³, vorzugsweise nicht mehr als 150 kg/m³, bevorzugter nicht mehr als 60 kg/m³ und am meisten bevorzugt nicht mehr als 40 kg/m³ aufweist.

13. Produkt nach Anspruch 2, welches um mindestens 25%, bevorzugt mindestens 30%, entspannbar komprimiert worden ist.

14. Produkt nach Anspruch 1, welches ein granuliertes MMVF-Produkt ist.

15. Verwendung eines Produkts nach Anspruch 1 als Wärmeisolierprodukt, vorzugsweise bei einer Temperatur von -80 bis 800°C.

16. Verwendung nach Anspruch 15 bei einer Temperatur von -80 bis 30°C.

17. Verwendung nach Anspruch 15 bei einer Temperatur von -30 bis 100°C.

18. Verwendung nach Anspruch 15 bei einer Temperatur von -20 bis 300°C.

19. Verwendung nach Anspruch 15 bei einer Temperatur von 80 bis 300°C.

20. Verfahren zur Herstellung eines Produkts nach Anspruch 1 oder Anspruch 2, umfassend die Bildung einer Wolke aus künstlichen, glasartigen Fasern, die von Luft mitgeführt werden, durch Zerfasern einer mineralischen Schmelze in einen Luftstrom, Einschließen eines organischen Bindemittels und von Graphit in einem Teil der oder in der ganzen Faserwolke, das Im-Luftstrom-Legen der Fasern und von Graphit auf eine Sammelvorrichtung als Bahn und das Umwandeln der Bahn in ein Vlies.

21. Verfahren nach Anspruch 20, in welchem der Graphit in einer Menge von nicht mehr als 15 Gew.-%, bevorzugt nicht mehr als 10 Gew.-% und bevorzugter nicht mehr als 7 Gew.-% Graphit, bezogen auf das Gewicht der hergestellten Fasern, enthalten ist.

22. Verfahren nach Anspruch 20, in weichem der Graphit in der Wolke als Dispersion von Graphit in einem wässrigen Bindemittel für das Vlies enthalten ist.

23. Verfahren nach Anspruch 20, in weichem der Graphit in der Wolke als Dispersion von Graphit in einem wässrigen Bindemittel gesondert von dem Bindemittel für das Vlies oder als Aufschlämmung in Wasser enthalten ist.

24. Verfahren nach Anspruch 20, in welchem der Graphit in der Wolke als Pulver enthalten ist.

25. Verfahren nach Anspruch 20, in welchem der Graphit in der Wolke als Dispersion von Graphit in einem wässrigen Bindemittel oder in Wasser enthalten ist, wobei die Dispersion auch ein Dispergiermittel, vorzugsweise in einer Menge von 0,1 bis 2 Gew.-% der Dispersion, enthält.

26. Verfahren nach Anspruch 20, in welchem der Graphit in der Wolke als Dispersion von Graphit in einem wässrigen Bindemittel oder in Wasser enthalten ist, wobei die Dispersion auch ein Schaumverhinderungsmittel, vorzugsweise in einer Menge von 0,01 bis 2 Gew.-% der Dispersion, enthält.

27. Verfahren nach Anspruch 20, in welchem der Graphit in der Wolke als Dispersion von Graphit in einem wässrigen Bindemittel oder in Wasser enthalten ist, wobei die Dispersion auch ein Antiabsetzmittel, vorzugsweise in einer Menge von 0, 05 bis 2 Gew.-% der Dispersion, enthält.

28. Verfahren nach Anspruch 20 oder Anspruch 21, in welchem der Graphit in der Dispersion in einer Menge von 0,5 bis 50 Gew.-% der Dispersion enthalten ist.

29. Verfahren nach Anspruch 20, umfassend das Komprimieren des Vlieses um mindestens 25%, vorzugsweise mindestens 30%.

30. Produkt nach irgendeinem der Ansprüche 1 bis 14, in weichem das künstliche, glasartige Fasermaterial zusätzlich ein weiteres teilchenförmiges Additiv ausgewählt aus der Gruppe bestehend aus Kieselsäure, Titanoxid. Silicium, Glimmer, Aluminium und Mischungen davon umfasst.

31. Produkt nach Anspruch 30, in welchem das Additiv Aluminium, Silicium oder Glimmer ist.

32. Verwendung nach irgendeinem der Ansprüche 15 bis 19, in welchem das künstliche, glasartige Fasermaterial zusätzlich ein weiteres teilchenförmiges Additiv ausgewählt aus der Gruppe bestehend aus Kieselsäure, Titanoxid, Silicium, Glimmer, Aluminium und Mischungen davon umfasst.

33. Verfahren nach irgendeinem der Ansprüche 20 bis 29, in welchem das künstliche, glasartige Fasermaterial zusätzlich ein weiteres teilchenförmiges Additiv ausgewählt aus der Gruppe bestehend aus Kieselsäure, Titanoxid, Silicium, Glimmer, Aluminium und Mischungen davon, umfasst.

## Revendications

1. Produit d'isolation thermique comprenant un matériau fibreux vitreux artificiel à couche appliquée par jet d'air dans lequel du graphite est distribué de manière sensiblement homogène, et les particules de graphite sont maintenues dans le matériau fibreux vitreux artificiel en étant liées aux surfaces des fibres vitreuses artificielles par un liant organique.

2. Produit d'isolation thermique selon la revendication 1 comprenant une couche qui est un panneau de fibres vitreuses artificielles. à couche appliquée par jet d'air ou une strate de panneau **caractérisé en ce que** du graphite est distribué de manière sensiblement homogène dans toute la couche.

3. Produit selon la revendication 1 ou la revendication 2 où le graphite est sous forme de particules lamellaires.

4. Produit selon la revendication 3 où les particules de graphite ont une dimension de particule médiane en volume d₅₀ mesurée par une technique de dispersion laser d'au plus 12 µm, de préférence d'au plus 5 µm, de préférence encore d'au plus 3 µm.

5. Produit selon la revendication 3 où les particules de graphite ont une dimension de particule médiane en volume d₅₀ mesurée par une technique de dispersion laser d'au moins 0,5 µm, de préférence d'au moins 1 µm.

6. Produit selon l'une quelconque des revendications 3 à 5 où les particules de graphite ont une surface spécifique mesurée par une technique de dispersion laser d'au moins 0,3 m²/g, de préférence d'au moins 0,8 m²/g, de préférence encore d'au moins 1 m²/g.

7. Produit selon l'une quelconque des revendications 3 à 5 où les particules de graphite ont une surface spécifique mesurée par BET d'au moins 0,5 m²/g, de préférence d'au moins 5 m²/g, de préférence encore d'au moins 15 m²/g.

8. Produit selon l'une quelconque des revendications 3 à 7 où les particules de graphite ont une surface spécifique mesurée par BET d'au plus 40 m²/g, de préférence d'au plus 30 m²/g.

9. Produit selon l'une quelconque des revendications précédentes, où le graphite est du graphite naturel.

10. Produit selon la revendication 3 où le matériau fibreux vitreux artificiel est lié par un liant organique qui maintient les particules de graphite dans la couche.

11. Produit selon l'une quelconque des revendications précédentes où la quantité de graphite n'est pas supérieure à 15 %, de préférence pas supérieure à 10 %, et de préférence encore pas supérieure à 6 % en masse par rapport à la masse du matériau fibreux vitreux artificiel dans lequel il est distribué de manière homogène.

12. Produit selon l'une quelconque des revendications précédentes qui a une masse volumique d'au plus 300 kg/m³, de préférence d'au plus 150 kg/m³, de préférence encore d'au plus 60 kg/m³, de manière particulièrement préférable d'au plus 40 kg/m³.

13. Produit selon la revendication 2 qui a été compressé de manière réversible d'au moins 25 %, de préférence d'au moins 30 %.

14. Produit selon la revendication 1 qui est un produit FVA granulé.

15. Utilisation d'un produit selon la revendication 1 comme produit d'isolation thermique, de préférence à une température de -80 à 800°C.

16. Utilisation selon la revendication 15 à une température de -80 à 30°C.

17. Utilisation selon la revendication 15 à une température de -30 à 100°C.

18. Utilisation selon la revendication 15 à une température de -20 à 300°C.

19. Utilisation selon la revendication 15 à une température de 80 à 300°C.

20. Procédé de production d'un produit selon la revendication 1 ou la revendication 2 comprenant la formation d'un nuage de fibres vitreuses artificielles entraînées dans l'air par transformation en fibres d'une masse minérale fondue dans un courant d'air, l'inclusion d'un liant organique et de graphite dans tout ou partie du nuage de fibres, l'application en couche par jet d'air des fibres et du graphite sur un collecteur sous forme d'une nappe et la conversion de la nappe en un panneau.

21. Procédé selon la revendication 20 où le graphite est indus en une quantité d'au plus 15 %, de préférence d'au plus 10 %, de préférence encore d'au plus 7 %, en masse de graphite par rapport à la masse de fibres produites.

22. Procédé selon la revendication 20 où le graphite est inclus dans le nuage sous forme d'une dispersion de graphite dans un liant aqueux pour le panneau.

23. Procédé selon la revendication 20 où le graphite est indus dans le nuage sous forme d'une dispersion de graphite dans un liant aqueux séparément du liant pour le panneau ou sous forme d'une suspension dans l'eau.

24. Procédé selon la revendication 20 où le graphite est inclus dans le nuage sous forme d'une poudre.

25. Procédé selon la revendication 20 où le graphite est inclus dans le nuage sous forme d'une dispersion de graphite dans un liant aqueux ou dans l'eau, où la dispersion contient aussi un agent dispersant, de préférence en une quantité de 0,1 à 2 % en masse de la dispersion.

26. Procédé selon la revendication 20 où le graphite est inclus dans le nuage sous forme d'une dispersion de graphite dans un liant aqueux ou dans l'eau, où la dispersion contient aussi un antimousse, de préférence en une quantité de 0,01 à 2 % en masse de la dispersion.

27. Procédé selon la revendication 20 où le graphite est inclus dans le nuage sous forme d'une dispersion de graphite dans un liant aqueux ou dans l'eau, où la dispersion contient aussi un agent anti-sédimentation, de préférence en une quantité de 0,05 à 2 % en masse de la dispersion.

28. Procédé selon la revendication 20 ou la revendication 21 où le graphite est indus dans la dispersion en une quantité de 0,5 à 50 % en masse de la dispersion.

29. Procédé selon la revendication 20 comprenant la compression du panneau d'au moins 25 %, de préférence d'au moins 30 %.

30. Produit selon l'une quelconque des revendications 1 à 14 où le matériau fibreux vitreux artificiel comprend en outre un autre additif particulaire choisi dans le groupe consistant en la silice, l'oxyde de titane, le silicium, le mica, l'aluminium et leurs mélanges.

31. Produit selon la revendication 30 où l'additif est l'aluminium, le silicium ou le mica.

32. Utilisation selon l'une quelconque des revendications 15 à 19 où le matériau fibreux vitreux artificiel comprend en outre un autre additif particulaire choisi dans le groupe consistant en la silice, l'oxyde de titane, le silicium, le mica, l'aluminium et leurs mélanges.

33. Procédé selon l'une quelconque des revendications 20 à 29 où le matériau fibreux vitreux artificiel comprend en outre un autre additif particulaire choisi dans le groupe consistant en la silice, l'oxyde de titane, le silicium, le mica, l'aluminium et leurs mélanges.
